# EUROPEAN PATENT APPLICATION

(11) **EP 4 834 583 A1**
(43) Date of publication of application: **04.11.2026**
(21) Application number: 24912634.3
(22) Date of filing: 19.12.2024
(51) Int. Cl.: B32B 27/18, B32B 27/32, C08K 5/10, C08K 5/17, C08L 23/04, C08L 23/06

(54) **RUST-PREVENTING FILM**

(30) Priority: 26.12.2023 JP 2023219675; 18.10.2024 JP 2024183932; 18.10.2024 JP 2024184022
(71) Applicant: Dai Nippon Printing Co., Ltd., Tokyo 162-8001 (JP)
(72) Inventor: NAKAJIMA Hiroyoshi, Tokyo 162-8001 (JP); TAKASUGI Yuya, Tokyo 162-8001 (JP); NOTO Tsutomu, Tokyo 162-8001 (JP)
(74) Representative: Beck Greener LLP
(86) International application number: PCT/JP2024/045044
(87) International publication number: WO 2025/142745

(57) **Abstract**

A corrosion-inhibiting film includes at least recycled polyethylene, a volatile corrosion inhibitor, and an antioxidant, in which the volatile corrosion inhibitor is selected from a carboxylic acid ester and a heteroaromatic compound, and the antioxidant is a phenolic antioxidant.

## Description

### Technical Field

The present disclosure relates to corrosion-inhibiting films, and more particularly, to a corrosion-inhibiting film for packaging metal members, such as mechanical components, so as to suppress oxidation and rust formation on metal surfaces during storage, handling, and transportation.

### Background Art

Conventionally, when metal members are stored for a long period of time, it has been common to apply a rust-preventive oil as a treatment for suppressing the occurrence of rust, and thereafter to store the metal members after packaging or the like. For mechanical components to which rust prevention by application of a rust-preventive oil or the like cannot be performed, a method is known in which, instead of the rust-preventive oil, the components are packaged and stored using a volatile corrosion inhibitor or a corrosion-inhibiting film formed by kneading a volatile corrosion inhibitor into a resin film.

In the corrosion-inhibiting film in which the above-described volatile corrosion inhibitor is used, it is necessary for the film to have gas permeability so that the volatile corrosion inhibitor can vaporize. In a single-layer film, the volatile corrosion inhibitor volatilizes not only into the interior of the package but also to the exterior; therefore, a multilayer film configuration has been used. For example, a multilayer film has been proposed in which a resin film containing a volatile corrosion inhibitor is laminated with a base film such as nylon. According to such a multilayer corrosion-inhibiting film, diffusion or volatilization of the volatile corrosion inhibitor toward the outer layer (atmosphere side) is suppressed, and it is said that a high corrosion-inhibiting effect can be maintained over a long period of time (for example, Patent Literature 1).

Multilayer films have also been proposed which include an innermost layer containing a volatile corrosion inhibitor, an intermediate layer composed of a gas-barrier resin, and an outermost layer serving as a base layer. According to such multilayer films, the provision of the intermediate layer is known to improve barrier properties against vaporized corrosion inhibitor gas, oxygen, or water vapor (see, for example, Patent Literature 2).

A multilayer corrosion-inhibiting film is disclosed in which a barrier film, including a vapor-deposited film and an organic coating layer provided on a substrate for enhancing barrier properties, is laminated to a sealant layer (for example, Patent Literature 3).

### Citation List

### Patent Literature

PTL 1: Japanese Unexamined Patent Application Publication No. 2013-059864
PTL 2: Japanese Unexamined Patent Application Publication No. 2019-155611
PTL 3: Japanese Unexamined Patent Application Publication No. 2020-189689

### Summary of Invention

### Technical Problem

In recent years, the use of recycled products has been recommended from the viewpoint of reducing environmental impact. In the field of packaging films and the like, attempts have been made to actively use recycled resin products. However, while recycled resins such as polyester and polyethylene are available on the market, there are currently no recycled products for specialized gas barrier resins and the like.

For example, in the case of polyethylene recycled by material recycling, an antioxidant may be added to suppress thermal decomposition and gelation when the polyethylene is remelted during recycling. As such antioxidants for suppressing thermal degradation of polyethylene, phenolic antioxidants and phosphorus-based antioxidants are used.

In the corrosion-inhibiting film containing the volatile corrosion inhibitor as described above, when the recycled polyethylene constituting the resin film contains an antioxidant, the antioxidant may deactivate the volatile corrosion inhibitor and may reduce the corrosion-inhibiting effect of the corrosion-inhibiting film.

For example, it is known that polyethylene recycled by material recycling contains impurities and various grades as compared with virgin polyethylene resin, and therefore requires a higher temperature during film formation. Accordingly, when an attempt is made to use a recycled resin for a corrosion-inhibiting film, there has been a problem in that thermal decomposition or volatilization of the volatile corrosion inhibitor is promoted.

It is an object of the present disclosure to provide a corrosion-inhibiting film that exhibits an excellent corrosion-inhibiting effect while using a recycled resin.

### Solution to Problem

The inventors have found that, even when an antioxidant is contained in a recycled polyethylene resin, if the antioxidant is a specific compound and a volatile corrosion inhibitor to be used is a specific compound, there can be provided a corrosion-inhibiting film that suppresses deactivation of the volatile corrosion inhibitor by the antioxidant and thereby exhibits an excellent corrosion-inhibiting effect while using a recycled resin. A first aspect of the present disclosure is based on this finding.

The inventors have also found that, by incorporating a volatile corrosion inhibitor into a layer composed of virgin polyethylene containing no antioxidant and forming this layer separately from a layer composed of recycled polyethylene containing an antioxidant, there can be provided a corrosion-inhibiting film that suppresses deactivation of the volatile corrosion inhibitor by the antioxidant and thereby exhibits an excellent corrosion-inhibiting effect while using a recycled resin. A second aspect of the present disclosure is based on this finding.
[1] A corrosion-inhibiting film includes at least recycled polyethylene, a volatile corrosion inhibitor, and an antioxidant,
   in which the volatile corrosion inhibitor is selected from a carboxylic acid ester and a heteroaromatic compound, and
   the antioxidant is a phenolic antioxidant.
[2] In the corrosion-inhibiting film described in [1], the volatile corrosion inhibitor is contained in an amount of 2% to 10% by mass relative to the recycled polyethylene.
[3] In the corrosion-inhibiting film described in [1] or [2], the antioxidant is contained in an amount of 500 to 5000 ppm relative to the recycled polyethylene.
[4] In the corrosion-inhibiting film described in any one of [1] to [3], the corrosion-inhibiting film includes a first layer containing at least the recycled polyethylene, the volatile corrosion inhibitor, and the antioxidant, and a second layer containing polyethylene,
   the polyethylene constituting the second layer is at least one selected from the group consisting of recycled polyethylene and virgin polyethylene, and
   the first layer and the second layer are formed by co-extrusion.
[5] In the corrosion-inhibiting film described in [4], the recycled polyethylene is polyethylene having a density of 0.860 g/cm³ or more and 0.932 g/cm³ or less.
[6] A corrosion-inhibiting film includes at least a first layer containing virgin polyethylene and a volatile corrosion inhibitor, and a second layer containing recycled polyethylene and an antioxidant,
   in which the first layer and the second layer are formed by co-extrusion.
[7] In the corrosion-inhibiting film described in [6], the antioxidant is a phenolic antioxidant.
[8] In the corrosion-inhibiting film described in [6] or [7], the volatile corrosion inhibitor is at least one selected from a carboxylic acid ester-based corrosion inhibitor, an alkanolamine-based corrosion inhibitor, and a heteroaromatic compound.
[9] In the corrosion-inhibiting film described in any one of [6] to [8], the second layer further contains virgin polyethylene.
[10] In the corrosion-inhibiting film described in any one of [6] to [9], the volatile corrosion inhibitor is contained in an amount of 2% to 10% by mass relative to the virgin polyethylene in the first layer.
[11] In the corrosion-inhibiting film described in any one of [6] to [10], the antioxidant is contained in an amount of 500 to 5000 ppm relative to the polyethylene constituting the second layer.
[12] In the corrosion-inhibiting film described in any one of [6] to [11], the polyethylene constituting the first layer is polyethylene having a density of 0.860 g/cm³ or more and 0.932 g/cm³ or less.
[13] The corrosion-inhibiting film described in any one of [6] to [12] further includes a third layer made of polyethylene,
   in which the first layer, the second layer, and the third layer are formed by co-extrusion.
[14] A corrosion-inhibiting film includes a first layer, a second layer, and a third layer,
   in which the first layer contains a volatile corrosion inhibitor and polyethylene having a density of 0.860 g/cm³ or more and 0.932 g/cm³ or less,
   the second layer contains recycled polyethylene,
   the third layer contains polyethylene having a density equal to or higher than that of the polyethylene constituting the first layer, and
   the first layer, the second layer, and the third layer are formed by co-extrusion.
[15] In the corrosion-inhibiting film described in any one of [5], [12], and [14], the polyethylene constituting the first layer and having a density of 0.860 g/cm³ or more and 0.932 g/cm³ or less is at least one selected from low-density polyethylene and linear low-density polyethylene.
[16] In the corrosion-inhibiting film described in [14], the volatile corrosion inhibitor is at least one selected from a carboxylic acid ester-based corrosion inhibitor and an alkanolamine-based corrosion inhibitor.
[17] In the corrosion-inhibiting film described in [14] or [16], the first layer contains 2% to 10% by mass of the volatile corrosion inhibitor.
[18] In the corrosion-inhibiting film described in any one of [14], [16], and [17], the second layer has a thickness of 2 to 4 times the thickness of the first layer.
[19] In the corrosion-inhibiting film described in any one of [14] and [16] to [18], the second layer contains the recycled polyethylene and virgin polyethylene.
[20] In the corrosion-inhibiting film described in any one of [14] and [16] to [19], the polyethylene constituting the first layer and having a density of 0.860 g/cm³ or more and 0.932 g/cm³ or less is at least one selected from the group consisting of virgin polyethylene and recycled polyethylene.

### Advantageous Effects of Invention

According to the present disclosure, there can be provided a corrosion-inhibiting film having an excellent corrosion-inhibiting effect while using a recycled resin.

### Brief Description of Drawings

[Fig. 1] Fig. 1 is a schematic cross-sectional view illustrating a corrosion-inhibiting film according to an embodiment of the present disclosure.
[Fig. 2] Fig. 2 is a schematic cross-sectional view illustrating a corrosion-inhibiting film according to an embodiment of the present disclosure.
[Fig. 3] Fig. 3 is a schematic cross-sectional view illustrating a corrosion-inhibiting film according to an embodiment of the present disclosure.
[Fig. 4] Fig. 4 illustrates GC-MS measurement results of the resin compositions of Example 1 and Comparative Example 1.
[Fig. 5] Fig. 5 illustrates GC-MS measurement results of the resin compositions of Example 1 and Comparative Example 2.
[Fig. 6] Fig. 6 illustrates GC-MS measurement results of the resin compositions of Example 3 and Comparative Example 3.
[Fig. 7] Fig. 7 illustrates GC-MS measurement results of the resin compositions of Example 4 and Comparative Example 4.
[Fig. 8] Fig. 8 illustrates photographs of the appearance of the surface of a steel plate for each of Examples 7 to 10 and Comparative Example 5 after evaluation of the corrosion resistance of the corrosion-inhibiting films.

### Description of Embodiments

In the present specification, when a plurality of candidates for upper limit values and a plurality of candidates for lower limit values are presented for a certain parameter, a numerical range of the parameter may be constituted by combining any one of the candidates for upper limit values with any one of the candidates for lower limit values. As an example, the following description will be provided: "Parameter B is preferably A1 or more, more preferably A2 or more, and still more preferably A3 or more. Parameter B is preferably A4 or less, more preferably A5 or less, and still more preferably A6 or less." In this example, the numerical range of parameter B may be A1 or more and A4 or less, may be A1 or more and A5 or less, may be A1 or more and A6 or less, may be A2 or more and A4 or less, may be A2 or more and A5 or less, may be A2 or more and A6 or less, may be A3 or more and A4 or less, may be A3 or more and A5 or less, or may be A3 or more and A6 or less.

In the present specification, "polyethylene" refers to a polymer in which the proportion of structural units derived from ethylene is more than 50 mol% in the total amount of structural units derived from polymerizable monomers. In this polymer, the proportion of the structural units derived from ethylene is preferably 70 mol% or more, more preferably 80 mol% or more, still more preferably 90 mol% or more, and particularly preferably 95 mol% or more. The above proportion is measured by nuclear magnetic resonance spectroscopy (NMR).

In the present specification, polyethylene may be a homopolymer of ethylene, or may be a copolymer of ethylene and an ethylenically unsaturated monomer other than ethylene. Examples of the ethylenically unsaturated monomer other than ethylene include α-olefins having 3 or more and 20 or less carbon atoms, such as propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene; vinyl monomers, such as vinyl acetate and vinyl propionate; and (meth)acrylates, such as methyl (meth)acrylate and ethyl (meth)acrylate.

In the present specification, examples of the polyethylene include high-density polyethylene, medium-density polyethylene, low-density polyethylene, linear low-density polyethylene, ethylene-vinyl acetate copolymers, and ethylene-(meth)acrylic acid ester copolymers.

In the present specification, the density of polyethylene is as follows.

The density of low-density polyethylene is 0.860 g/cm³ or more and 0.932 g/cm³ or less, preferably 0.900 g/cm³ or more and 0.932 g/cm³ or less.

The density of linear low-density polyethylene is 0.860 g/cm³ or more and 0.932 g/cm³ or less, preferably 0.900 g/cm³ or more and 0.932 g/cm³ or less.

The density of medium-density polyethylene is more than 0.932 g/cm³ and 0.945 g/cm³ or less.

The density of high-density polyethylene is more than 0.945 g/cm³ and preferably 0.965 g/cm³ or less.

The density of polyethylene is measured in accordance with JIS K7112-2:2023 (density gradient column method, 23°C).

Low-density polyethylene is, for example, polyethylene obtained by polymerizing ethylene using a high-pressure polymerization method (high-pressure low-density polyethylene). Linear low-density polyethylene is, for example, polyethylene obtained by polymerizing ethylene and a small amount of an α-olefin using a polymerization method employing a multi-site catalyst such as a Ziegler-Natta catalyst or a single-site catalyst such as a metallocene catalyst.

Polyethylene having different densities or degrees of branching can be obtained by appropriately selecting a polymerization method. For example, it is preferable to perform polymerization in a single stage or in two or more stages by any one of gas-phase polymerization, slurry polymerization, solution polymerization, and high-pressure ionic polymerization, using, as a polymerization catalyst, a multi-site catalyst such as a Ziegler-Natta catalyst or a single-site catalyst such as a metallocene catalyst.

The melt flow rate (MFR) of a polyolefin such as polyethylene in the present specification is described below. From the viewpoint of film formability and processability, the above-described MFR is preferably 0.1 g/10 min or more, more preferably 0.3 g/10 min or more, still more preferably 0.5 g/10 min or more, and is preferably 30 g/10 min or less, more preferably 20 g/10 min or less, still more preferably 10 g/10 min or less, and particularly preferably 5 g/10 min or less. The MFR is, for example, 0.1 g/10 min or more and 30 g/10 min or less. The MFR of the polyolefin is measured by Method A under a load of 2.16 kg in accordance with JIS K7210-1:2014. The MFR measurement temperature is set according to the melting point of the polyolefin and the like, and is 190°C for polyethylene.

In the present specification, a biomass-derived resin material (hereinafter, also referred to as "biomass-derived polyethylene") may be used as the polyethylene. The biomass material is, for example, a resin material obtained using, as at least part of the raw materials, biomass-derived raw materials (specifically, plant-derived raw materials). Since the biomass material is a carbon-neutral material, environmental impact can be reduced.

In the present specification, recycled polyethylene refers to polyethylene recycled from used polyethylene products by mechanical recycling or chemical recycling. Mechanical recycling is generally a method in which collected polyethylene films and the like are shredded and alkali-washed to remove dirt and foreign matter from the film surfaces, and then dried for a certain period of time at elevated temperatures under reduced pressure to diffuse contaminants remaining inside the films, thereby decontaminating the films and removing contamination therefrom, and regenerating polyethylene. Chemical recycling is generally a method in which collected polyethylene films and the like are depolymerized into monomers, and the resulting monomers are re-polymerized to regenerate polyethylene. In the present specification, virgin polyethylene refers to polyethylene that is not recycled polyethylene and is obtained using a fossil fuel-derived raw material or a biomass-derived raw material.

Embodiments of the present disclosure will be described in detail below. The present disclosure can be embodied in many different forms and should not be construed as being limited to the following exemplary embodiments. The drawings may schematically illustrate the widths, thicknesses, shapes, and the like of the respective layers as compared with those in the embodiments in order to clarify the description; however, the drawings are merely examples and do not limit the interpretation of the present disclosure. In the present specification and the drawings, the same reference signs are used to designate the same elements as those already described with reference to the preceding drawings, and detailed description thereof may be omitted as appropriate.

### <First Aspect>

Embodiments of the corrosion-inhibiting film according to a first aspect of the present disclosure will be described below with reference to the drawings as appropriate.

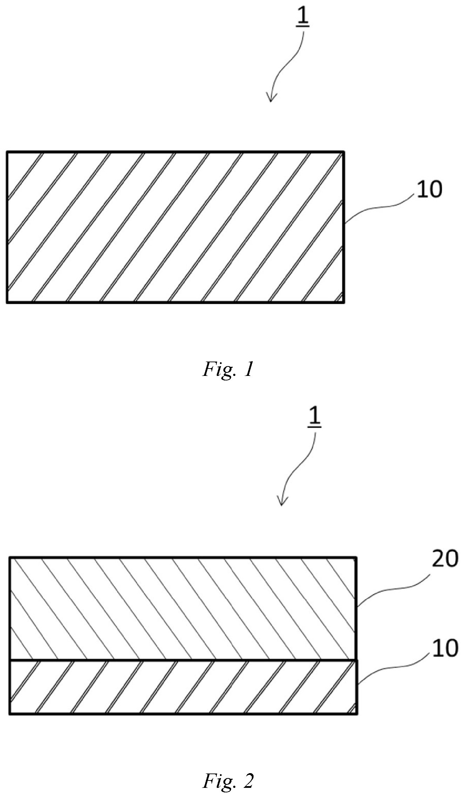

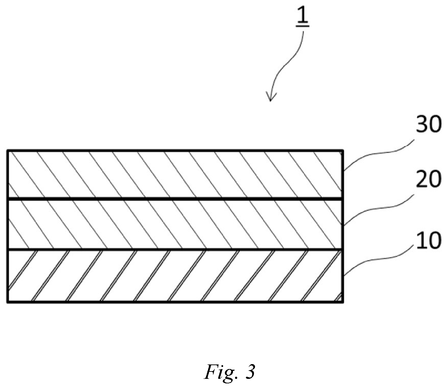

Fig. 1 is a schematic cross-sectional view illustrating an embodiment of a corrosion-inhibiting film according to the first aspect of the present disclosure. A corrosion-inhibiting film 1 according to an embodiment of the present disclosure is composed of a first layer 10 containing at least recycled polyethylene, a volatile corrosion inhibitor, and an antioxidant. Figs. 2 and 3 are schematic cross-sectional views illustrating other embodiments of the corrosion-inhibiting films according to the first aspect of the present disclosure. The corrosion-inhibiting film 1 according to another embodiment of the corrosion-inhibiting film of the first aspect of the present disclosure may have a configuration including the first layer 10 containing at least recycled polyethylene, a volatile corrosion inhibitor, and an antioxidant, and a second layer 20 containing at least one selected from the group consisting of recycled polyethylene and virgin polyethylene. In addition to the second layer, as illustrated in Fig. 3, the corrosion-inhibiting film may further include a third layer 30 containing at least one selected from the group consisting of recycled polyethylene and virgin polyethylene. In the corrosion-inhibiting film 1 according to the first aspect of the present disclosure illustrated in Figs. 2 and 3, the first layer 10 containing the volatile corrosion inhibitor is a layer that constitutes the innermost layer when the corrosion-inhibiting film is used as a package for metal components and the like. In the corrosion-inhibiting film 1 according to the first aspect of the present disclosure illustrated in Fig. 2, the second layer 20 is a layer that constitutes the outermost layer when used as a package. In the corrosion-inhibiting film 1 according to the first aspect of the present disclosure illustrated in Fig. 3, the third layer 30 is a layer that constitutes the innermost layer when the corrosion-inhibiting film is used as a package for metal components and the like, and the second layer 20 is an intermediate layer provided between the first layer 10, which is the innermost layer, and the third layer 30, which is the outermost layer. Each of the layers constituting the corrosion-inhibiting film 1 according to the first aspect of the present disclosure will be described below.

When the corrosion-inhibiting film according to the first aspect of the present disclosure is configured as a single layer as illustrated in Fig. 1, the layer contains at least recycled polyethylene, a volatile corrosion inhibitor, and an antioxidant. Recycled polyethylene, particularly mechanically recycled polyethylene, is produced by remelting used polyethylene as described above, and an antioxidant may be added in that process in order to suppress thermal degradation of the polyethylene. The antioxidant suppresses cleavage of molecular chains and crosslinking reactions of the polyethylene by trapping radicals generated when the polyethylene undergoes thermal decomposition during remelting. Such an antioxidant may deactivate the volatile corrosion inhibitor. Among volatile corrosion inhibitors, carboxylic acid esters and heteroaromatic compounds are particularly susceptible to deactivation by amine-based antioxidants. Among volatile corrosion inhibitors, amine-based corrosion inhibitors have chemical structures similar to those of amine-based antioxidants; therefore, even when an amine-based corrosion inhibitor is used as the volatile corrosion inhibitor, it may function as an antioxidant (radical scavenger) due to the influence of heat during film formation, and as a result, the corrosion-inhibiting effect of the resulting corrosion-inhibiting film is reduced. In the first aspect of the present disclosure, a phenolic antioxidant is used as the antioxidant, and a carboxylic acid ester-based corrosion inhibitor or a heteroaromatic compound is used as the volatile corrosion inhibitor, thereby suppressing a reduction in the corrosion-inhibiting effect when the corrosion-inhibiting film is formed. The corrosion-inhibiting film that exhibits an excellent corrosion-inhibiting effect while reducing environmental impact can be provided by using such a specific volatile corrosion inhibitor in combination with a specific antioxidant.

When the corrosion-inhibiting film according to the first aspect of the present disclosure is configured as a single layer as illustrated in Fig. 1, the layer contains recycled polyethylene as a main component as a resin component. In the present disclosure, the phrase "the layer containing recycled polyethylene as a main component" refers to a layer in which the proportion of recycled polyethylene is 50% or more by mass in 100% by mass of the layer. The proportion is preferably 60% or more by mass, more preferably 70% or more by mass, still more preferably 80% or more by mass, even more preferably 90% or more by mass, and particularly preferably 95% or more by mass.

The density of the recycled polyethylene is preferably 0.860 g/cm³ or more and 0.932 g/cm³ or less. As the polyethylene having a density within the range, low-density polyethylene and linear low-density polyethylene can be suitably used, and linear low-density polyethylene can be more preferably used. As an example, it is more preferable to use linear low-density polyethylene having a density of 0.900 g/cm³ or more and 0.932 g/cm³ or less.

Even when virgin polyethylene is contained in addition to recycled polyethylene as a resin component, the density of the virgin polyethylene is preferably 0.860 g/cm³ or more and 0.932 g/cm³ or less, and linear low-density polyethylene can be more preferably used. As an example, it is more preferable to use linear low-density polyethylene having a density of 0.900 g/cm³ or more and 0.932 g/cm³ or less.

When the corrosion-inhibiting film according to the first aspect of the present disclosure is configured as a single layer as illustrated in Fig. 1, it contains a phenolic antioxidant together with recycled polyethylene that configures the layer. Examples of the phenolic antioxidant include octadecyl 3-(3,5-di-tert-butyl-4-hydroxyphenyl)propionate and pentaerythritol tetrakis[3-(3,5-di-tert-butyl-4-hydroxyphenyl)propionate]. Commercially available phenolic antioxidants may be used, and examples thereof include 3,3',3pha',.alpha'',5,5',5''-Hexa-tert-butyl-.alpha,.alpha',.alpha''-(mesitylene-2,4,6-triyl)tri-p-cresol (Irganox 1330, manufactured by BASF) and 3,9-bis{2-[3-(3-tert-butyl-4-hydroxy-5-methylphenyl)propionyloxy]-1,1-dimethylethyl}-2,4,8,10-tetraoxaspiro[5.5]undecane (Adekastab AO-80, manufactured by Adeka Corporation).

The phenolic antioxidant may be kneaded into recycled polyethylene and formed into a film so as to obtain a corrosion-inhibiting film, or may be added when used polyester is remelted by mechanical recycling. That is, the phenolic antioxidant may be contained in recycled polyester in advance.

The phenolic antioxidant is preferably contained in an amount of 500 to 5000 ppm, more preferably 1000 to 4000 ppm, relative to the recycled polyethylene. This does not exclude inclusion of a phenolic antioxidant used in producing the recycled polyethylene, and the recycled polyethylene may contain antioxidants conventionally used (phosphorus-based, sulfur-based, amine-based, and the like). As described below, when the corrosion-inhibiting film is a multilayer film, the phenolic antioxidant is preferably contained in an amount of 500 ppm, more preferably 1000 to 4000 ppm, relative to the recycled polyethylene in the layer containing the volatile corrosion inhibitor.

When virgin polyethylene is contained in addition to recycled polyethylene, a phenolic antioxidant may be used during the production of the virgin polyethylene, in which case the content of the phenolic antioxidant is the total amount of the phenolic antioxidant contained in the recycled polyethylene and the virgin polyethylene, and the phenolic antioxidant added during the production of the corrosion-inhibiting film.

As the volatile corrosion inhibitor, among volatile corrosion inhibitors that volatilize at 40°C to 60°C to exhibit a corrosion-inhibiting effect (for example, quaternary ammonium salts of aliphatic or aromatic acids; nitrites of amines; carboxylates of amines; chromates of amines; esters of carboxylic acids; heterocyclic compounds and thioureas; and heterocyclic compounds having a mercapto group, a triazole ring, a pyrrole ring, a pyrazole ring, a thiazole ring, or an imidazole ring), a carboxylic acid ester and a heteroaromatic compound that can suppress a reduction in the corrosion-inhibiting effect caused by a phenolic antioxidant are used.

As the carboxylic acid ester-based corrosion inhibitor, a fatty acid ester can be preferably used. The fatty acid moiety of the fatty acid ester preferably has 6 or more and 20 or less carbon atoms. When the carbon number is less than the above range, the boiling point may be too close to the film formation temperature, which may cause bubbles to form or may make it impossible to form a film. Specific examples of the fatty acid ester include alcohol esters of the above fatty acids and glyceryl fatty acid esters, and such a glyceryl fatty acid ester is preferably a glyceryl tri(fatty acid) ester, more preferably a glyceryl tricaprylate. Among the above fatty acids, it is preferable to use one or two or more selected from the group consisting of heptanoic acid, octanoic acid, decanoic acid, lauric acid, stearic acid, caprylic acid, capric acid, calcium stearate, and glyceryl tricaprylate.

Examples of the heteroaromatic compound include compounds having a triazole ring, a pyrrole ring, a pyrazole ring, a thiazole ring, or an imidazole ring, and in particular, triazole ring-containing compounds and benzoate-based compounds are preferred. More specific examples of the corrosion inhibitor having a triazole ring include benzotriazole (BTA) and tolyltriazole (TTA). Examples of the benzoate-based compound include monoethanolamine benzoate (MEA·BA), dicyclohexylammonium benzoate (DICHA·BA), and diisopropylammonium benzoate (DIPA·BA).

From the viewpoint of release characteristics of the corrosion inhibitor and the extrusion film formability of the resin, the amount of the volatile corrosion inhibitor added is preferably 0.1% or more by mass and 30% or less by mass, more preferably 0.5% or more by mass and 20% or less by mass, and still more preferably 2% or more by mass and 10% or less by mass, relative to the recycled polyethylene constituting the layer containing the volatile corrosion inhibitor. When the layer containing the volatile corrosion inhibitor contains, as resin components, recycled polyethylene and virgin polyethylene, the amount of the volatile corrosion inhibitor added is preferably 0.1% or more by mass and 30% or less by mass, more preferably 0.5% or more by mass and 20% or less by mass, and still more preferably 2% or more by mass and 10% or less by mass, relative to the total amount of the recycled polyethylene and the virgin polyethylene.

When the corrosion-inhibiting film according to the first aspect of the present disclosure has a single-layer structure as illustrated in Fig. 1, the thickness of the corrosion-inhibiting film, which may be appropriately determined depending on the intended use, is generally 50 µm or more, more preferably 60 µm or more, and still more preferably 80 µm or more, and generally 150 µm or less, more preferably 120 µm or less, and still more preferably 100 µm or less, from the viewpoint of diffusion characteristics and the like of the volatile corrosion inhibitor.

Embodiments will be described below in which the corrosion-inhibiting film according to the first aspect of the present disclosure is multilayered. As illustrated in Figs. 2 and 3, the corrosion-inhibiting film according to the first aspect of the present disclosure may include the second layer in addition to the layer containing the volatile corrosion inhibitor (the first layer), and may further include the third layer in addition to the second layer. The second layer and/or the third layer serve as an outermost layer when the corrosion-inhibiting film is used as a package for metal components and the like. When the corrosion-inhibiting film includes the outermost layer, diffusion of the volatile corrosion inhibitor contained in the first layer into the atmosphere outside the corrosion-inhibiting film can be suppressed. In addition, puncture resistance is improved compared with a single-layer film. Therefore, even when packaging a metal machine member having a protruding portion, the corrosion-inhibiting film according to the first aspect of the present disclosure can suppress tearing caused by the machine component.

When the corrosion-inhibiting film is multilayered, the layer containing the volatile corrosion inhibitor (the first layer) may have the same configuration as that of the above-described single-layer film. From the viewpoint of diffusion characteristics and the like of the volatile corrosion inhibitor, the thickness of the first layer in the multilayer film is preferably 3 µm or more, more preferably 5 µm or more, and still more preferably 10 µm or more. From the viewpoint of film formability and processability, the thickness is preferably 60 µm or less, more preferably 40 µm or less, and still more preferably 30 µm or less. The thickness of the first layer is, for example, 10 to 30 µm.

When the second layer and/or the third layer are the outermost layer, the resin component mainly contains polyethylene having a density equal to or higher than that of the polyethylene constituting the above-described layer containing the volatile corrosion inhibitor (the first layer). For example, when the polyethylene constituting the first layer is low-density polyethylene or linear low-density polyethylene, low-density polyethylene, linear low-density polyethylene, medium-density polyethylene, or high-density polyethylene can be used for the outermost layer.

The second layer provided on the outer surface of the first layer may be made of at least one selected from the group consisting of recycled polyethylene and virgin polyethylene; however, from the viewpoint of reducing environmental impact, the second layer is preferably made of recycled polyethylene. Recycled polyethylene (particularly mechanically recycled polyethylene) is obtained by mixing various used polyethylenes (low-density polyethylene, linear low-density polyethylene, medium-density polyethylene, high-density polyethylene, and other polyethylenes) during recycling. However, in consideration of film formability and processability, recycled polyethylene having an MFR of 0.1 g/10 min or more and 30 g/10 min or less is preferably used.

The second layer may contain virgin polyethylene in addition to recycled polyethylene. Film formability and processability can be improved by appropriately adding virgin polyethylene. When the second layer contains recycled polyethylene and virgin polyethylene, the content of the virgin polyethylene is preferably more than 0% by mass and 50% or less by mass, more preferably 15% or more by mass and 35% or less by mass, relative to the entirety of the second layer.

When the second layer contains virgin polyethylene, the virgin polyethylene is preferably low-density polyethylene having a density of 0.860 g/cm³ or more and 0.932 g/cm³ or less, more preferably low-density polyethylene having a density of 0.900 g/cm³ or more and 0.932 g/cm³ or less, or is preferably linear low-density polyethylene having a density of 0.860 g/cm³ or more and 0.932 g/cm³ or less, more preferably linear low-density polyethylene having a density of 0.900 g/cm³ or more and 0.932 g/cm³ or less.

The thickness of the second layer is preferably 20 µm or more, more preferably 30 µm or more, and still more preferably 40 µm or more, from the viewpoint of reducing environmental impact. From the viewpoint of film formability and processability, the thickness is preferably 80 µm or less, more preferably 70 µm or less, and still more preferably 60 µm or less. The thickness of the second layer is, for example, 40 to 60 µm.

The second layer preferably has a thickness of 2 to 4 times the thickness of the above-described layer containing the volatile corrosion inhibitor (the first layer). When recycled polyethylene is used, the melting temperature during film formation needs to be set slightly higher (about 200°C to 210°C) than that for virgin polyethylene. When the first layer and the second layer (and further the third layer) are formed by, for example, a blown film co-extrusion process, the thickness of the second layer is set to be 2 to 4 times that of the first layer. Thus, during the extrusion, the surface of the first layer serving as the innermost layer can be air-cooled while heat sufficient to fully melt the recycled polyethylene is applied, so that thermal degradation or volatilization of the volatile corrosion inhibitor in the first layer can be suppressed. More preferably, the second layer has a thickness of 2 to 3 times that of the first layer.

When the third layer is further provided in addition to the second layer, from the viewpoint of suppressing diffusion of the volatile corrosion inhibitor, polyethylene having a high density is preferably used as the polyethylene constituting the third layer. However, from the viewpoints of film formability during production of the corrosion-inhibiting film and suppression of curling of the resulting film, polyethylene should be selected in such a manner that the difference in density between the polyethylene constituting the first layer and the polyethylene constituting the third layer is not large. From the viewpoints of suppressing diffusion of the volatile corrosion inhibitor and suppressing curling, it is preferable to use low-density polyethylene or linear low-density polyethylene having a density equal to or higher than that of the polyethylene constituting the first layer.

Either virgin polyethylene or recycled polyethylene may be used as the polyethylene constituting the third layer. From the viewpoint of reducing environmental impact, it can be said that it is preferable to use recycled polyethylene also for the third layer; however, as described above, from the viewpoints of suppressing diffusion of the volatile corrosion inhibitor and suppressing curling, it is preferable to use virgin polyethylene (low-density polyethylene or linear low-density polyethylene) having a density equal to or higher than that of the polyethylene constituting the first layer.

From the viewpoint of suppressing diffusion of the volatile corrosion inhibitor, the thickness of the third layer is preferably 3 µm or more, more preferably 5 µm or more, and still more preferably 10 µm or more. From the viewpoint of film formability and processability, the thickness is preferably 60 µm or less, more preferably 40 µm or less, and still more preferably 30 µm or less. The thickness of the third layer is, for example, 10 to 30 µm.

When recycled polyethylene is used for the second layer and/or the third layer, a phenolic antioxidant may be added during production of the corrosion-inhibiting film, in addition to an antioxidant contained during production of the recycled polyethylene. The amount of the phenolic antioxidant added is preferably 500 ppm to 5000 ppm, more preferably 1000 ppm to 4000 ppm, relative to the recycled polyethylene.

When the corrosion-inhibiting film according to the first aspect of the present disclosure is multilayered, the total thickness may also be appropriately adjusted depending on the intended use, and is generally 50 µm or more, more preferably 60 µm or more, and still more preferably 80 µm or more, and is generally 150 µm or less, more preferably 120 µm or less, and still more preferably 100 µm or less.

### [Method for Producing Corrosion-Inhibiting Film]

When the corrosion-inhibiting film according to the first aspect of the present disclosure is a single-layer film, it can be obtained by mixing recycled polyethylene, a volatile corrosion inhibitor, and an antioxidant, and then forming a film by, for example, blown film extrusion using a circular die or T-die film extrusion.

When a multilayer corrosion-inhibiting film is formed, it can be obtained by co-extruding the layer containing the volatile corrosion inhibitor (the first layer) and the other layers (the second layer and the third layer). As the co-extrusion, known film-forming processes, such as a blown film co-extrusion process and a co-extrusion process, can be employed. Among these, the blown film co-extrusion process makes it possible to perform melt co-extrusion at a lower temperature, such as 200°C or lower, and thus thermal decomposition and volatilization (vaporization) of the volatile corrosion inhibitor during film formation can be suppressed.

During film formation, the respective components may be mixed simultaneously, or a masterbatch prepared in advance by mixing recycled polyethylene with a volatile corrosion inhibitor and/or an antioxidant may be used, and film formation may be performed using a mixture of recycled polyethylene and the masterbatch. In particular, in order to enhance dispersibility of the volatile corrosion inhibitor, a masterbatch containing the volatile corrosion inhibitor may be used, and co-extrusion may be performed using a blend of the masterbatch and recycled polyethylene. The proportion of the volatile corrosion inhibitor in the masterbatch is not particularly limited; however, the masterbatch and polyethylene having a predetermined density may be blended so that the proportion of the volatile corrosion inhibitor in the layer containing the volatile corrosion inhibitor (the first layer) falls within the above-described range.

### <Second Aspect>

Embodiments of the corrosion-inhibiting film according to a second aspect of the present disclosure will be described below with reference to the drawings as appropriate.

Fig. 2 is a schematic cross-sectional view illustrating an embodiment of a corrosion-inhibiting film according to a second aspect of the present disclosure. The corrosion-inhibiting film 1 according to an embodiment of the corrosion-inhibiting film according to the second aspect of the present disclosure has a multilayer structure including at least the first layer 10 containing virgin polyethylene and a volatile corrosion inhibitor, and the second layer 20 containing recycled polyethylene and an antioxidant. Fig. 3 is a schematic cross-sectional view illustrating another embodiment of a corrosion-inhibiting film according to the second aspect of the present disclosure. The corrosion-inhibiting film 1 according to the other embodiment of the corrosion-inhibiting film according to the second aspect of the present disclosure has a multilayer structure including the first layer 10 containing virgin polyethylene and a volatile corrosion inhibitor, the second layer 20 containing recycled polyethylene and an antioxidant, and the third layer 30 made of polyethylene. The first layer containing the volatile corrosion inhibitor is a layer that constitutes the innermost layer when the corrosion-inhibiting film is used as a package for metal components and the like. In the corrosion-inhibiting film 1 according to the second aspect of the present disclosure illustrated in Fig. 2, the second layer 20 is a layer that constitutes the outermost layer when the film is used as a package. In the corrosion-inhibiting film 1 according to the second aspect of the present disclosure illustrated in Fig. 3, the third layer 30 is a layer that constitutes the innermost layer when the corrosion-inhibiting film is used as a package for metal components and the like, and the second layer 20 is an intermediate layer provided between the first layer 10, which is the innermost layer, and the third layer 30, which is the outermost layer. Each of the layers constituting the corrosion-inhibiting film 1 according to the second aspect of the present disclosure will be described below.

### [First Layer]

The first layer constituting the corrosion-inhibiting film according to the second aspect of the present disclosure is a layer that contains, as a resin component, virgin polyethylene as a main component. In the present disclosure, the phrase "layer containing polyethylene as a main component" refers to a layer in which the proportion of virgin polyethylene is 50% by mass or more in 100% by mass of the layer. The proportion is preferably 60% or more by mass, more preferably 70% or more by mass, still more preferably 80% or more by mass, even more preferably 90% or more by mass, and particularly preferably 95% or more by mass.

From the viewpoint of reducing environmental impact, it is preferable to use recycled polyethylene rather than virgin polyethylene; however, as described above, recycled polyethylene, particularly mechanically recycled polyethylene, is produced by remelting used polyethylene, and an antioxidant may be added in that process in order to suppress thermal degradation of the polyethylene. The antioxidant suppresses cleavage of molecular chains and crosslinking reactions of the polyethylene by trapping radicals generated when the polyethylene undergoes thermal decomposition during remelting. Such an antioxidant may deactivate the volatile corrosion inhibitor. As a result, the corrosion-inhibiting effect of the resulting corrosion-inhibiting film is reduced. In the second aspect of the present disclosure, a corrosion-inhibiting film having excellent corrosion-inhibiting effect while reducing environmental impact can be provided by using, as the second layer, a layer composed of recycled polyethylene containing an antioxidant, and by using virgin polyethylene having a low antioxidant content as a resin component constituting the first layer containing the volatile corrosion inhibitor.

The virgin polyethylene used in the first layer preferably has a density of 0.860 g/cm³ or more and 0.932 g/cm³ or less. As described above, low-density polyethylene or linear low-density polyethylene can be suitably used, and more preferably, linear low-density polyethylene can be used. More preferably, linear low-density polyethylene having a density of 0.900 g/cm³ or more and 0.932 g/cm³ or less is used as the resin component constituting the first layer.

The first layer constituting the corrosion-inhibiting film according to the second aspect of the present disclosure contains a volatile corrosion inhibitor. The first layer can be formed by kneading a volatile corrosion inhibitor into polyethylene having a predetermined density, which serves as the above-described resin component, and forming a film.

As the volatile corrosion inhibitor, a conventionally known volatile corrosion inhibitor that volatilizes at 40°C to 60°C to exhibit a corrosion-inhibiting effect can be used without particular limitation. Examples thereof include primary, secondary, tertiary, and quaternary ammonium salts of aliphatic or aromatic acids; nitrites of amines and carboxylates of amines; chromates of amines; esters of carboxylic acids; heterocyclic compounds and thioureas; and heterocyclic compounds and the like including a mercapto group, a triazole ring, a pyrrole ring, a pyrazole ring, a thiazole ring, and an imidazole ring. Among these, from the viewpoint of environmental compatibility, a carboxylic acid ester, an alkanolamine, and a heteroaromatic compound can be suitably used.

The characteristics of the carboxylic acid ester-based corrosion inhibitor are as described in the first aspect.

Examples of the alkanolamine-based corrosion inhibitor include dicyclohexylamine, monoethanolamine, diethanolamine, diisopropylamine, cyclohexylamine, nitronaphthylamine, ammonium benzoate, cyclohexylammonium benzoate, cyclohexylammonium carbamate, cyclohexylammonium nitrite, cyclohexylammonium caprylate, cyclohexylammonium laurate, dicyclohexylammonium benzoate, dicyclohexylammonium carbamate, isopropylammonium nitrite, isopropylammonium caprylate, isopropylammonium laurate, isopropylammonium benzoate, isopropylammonium carbamate, diisopropylammonium nitrite, diisopropylammonium caprylate, diisopropylammonium laurate, diisopropylammonium benzoate, diisopropylammonium carbamate, benzylammonium nitrite, benzylammonium caprylate, benzylammonium laurate, benzylammonium benzoate, benzylammonium carbamate, dibenzylammonium nitrite, dibenzylammonium caprylate, dibenzylammonium laurate, dibenzylammonium benzoate, and dibenzylammonium carbamate.

The characteristics of the heteroaromatic compound are as described in the first aspect.

From the viewpoint of release characteristics of the corrosion inhibitor and extrusion film formability of the resin, the amount of the volatile corrosion inhibitor added is preferably 0.1% or more by mass and 30% or less by mass, more preferably 0.5% or more by mass and 20% or less by mass, and still more preferably 2% or more by mass and 10% or less by mass, relative to the virgin polyethylene constituting the first layer.

The thickness of the first layer constituting the corrosion-inhibiting film is as described in the first aspect in the case where the film is multilayered.

### [Second Layer]

The second layer constituting the corrosion-inhibiting film according to the second aspect of the present disclosure is a layer located outside the first layer (i.e., a layer that constitutes the outer side when the corrosion-inhibiting film is used as a package for metal components and the like), and contains, as a main component, recycled polyethylene serving as a resin component. The use of recycled polyethylene enables a reduction in environmental impact. As described above, recycled polyethylene, particularly mechanically recycled polyethylene, can suppress thermal degradation by containing an antioxidant; however, it may deactivate a volatile corrosion inhibitor. In the corrosion-inhibiting film according to the second aspect of the present disclosure, when the second layer is formed from recycled polyethylene separately from the first layer containing the volatile corrosion inhibitor, an excellent corrosion-inhibiting effect can be provided while reducing environmental impact. Since recycled polyethylene contains impurities and various grades as compared with virgin polyethylene resin, when recycled polyethylene is used as a main component of the resin constituting the outermost layer or the first layer, the film formation temperature needs to be set higher. It is also known that recycled polyethylene is more likely to cause fish eyes and wrinkles when formed into a film than virgin polyethylene. In the second aspect of the present disclosure, the corrosion-inhibiting film has a two-layer structure in which recycled polyethylene is used for the second layer, so that the above-described problems can be solved while reducing environmental impact.

Recycled polyethylene (particularly mechanically recycled polyethylene) is obtained as a mixture of various types of used polyethylene (low-density polyethylene, linear low-density polyethylene, medium-density polyethylene, high-density polyethylene, and other polyethylenes) mixed together during recycling. However, in consideration of film formability and processability, recycled polyethylene having an MFR of 0.1 g/10 min or more and 30 g/10 min or less is preferably used.

In the corrosion-inhibiting film according to the second aspect of the present disclosure, the second layer may contain virgin polyethylene in addition to recycled polyethylene. The characteristics of the virgin polyethylene that may be contained in the second layer are as described in the first aspect.

The second layer, which contains recycled polyethylene as a main component, contains an antioxidant in order to suppress thermal degradation and the like of the polyethylene. As the antioxidant, a conventionally known antioxidant, for example, a known antioxidant such as a phenolic antioxidant, a phosphorus-based antioxidant, a sulfur-based antioxidant, or an amine-based antioxidant, can be used; however, from the viewpoint of the corrosion-inhibiting effect, an antioxidant containing dicyclohexylamine is preferably used.

The characteristics of the phenolic antioxidant are as described in the first aspect.

The thickness of the second layer is as described in the first aspect.

The second layer preferably has a thickness of 2 to 4 times the thickness of the first layer containing the volatile corrosion inhibitor. The reason for this is as described in the first aspect. The second layer more preferably has a thickness of 2 to 3 times the thickness of the first layer.

### [Third Layer]

The corrosion-inhibiting film according to the second aspect of the present disclosure may further include the third layer in addition to the second layer. When the third layer is provided, the third layer is a layer that constitutes the outermost layer when the corrosion-inhibiting film is used as a package for metal components and the like. The corrosion-inhibiting film includes the third layer, so that diffusion of the volatile corrosion inhibitor contained in the first layer into the atmosphere outside the corrosion-inhibiting film can be suppressed. The third layer contains, as a resin component, polyethylene serving as a main component, the polyethylene having a density equal to or higher than that of the polyethylene constituting the above-described first layer. For example, when the polyethylene constituting the first layer is low-density polyethylene or linear low-density polyethylene, low-density polyethylene, linear low-density polyethylene, medium-density polyethylene, or high-density polyethylene may be used for the outermost layer.

From the viewpoint of suppressing diffusion of the volatile corrosion inhibitor, it can be said that polyethylene having a high density is preferably used as the polyethylene constituting the third layer. However, from the viewpoints of film formability during film formation of the corrosion-inhibiting film and suppression of curling of the resulting film, polyethylene should be selected in such a manner that the difference in density between the recycled polyethylene constituting the first layer, which serves as the innermost layer, and the polyethylene constituting the third layer, which serves as the outermost layer, is not large. From the viewpoints of suppressing diffusion of the volatile corrosion inhibitor and suppressing curling and the like, it is preferable to use low-density polyethylene or linear low-density polyethylene having a density equal to or higher than that of the recycled polyethylene constituting the first layer.

Either virgin polyethylene or recycled polyethylene may be used as the polyethylene constituting the third layer. From the viewpoint of reducing environmental impact, it can be said that recycled polyethylene is preferably used also for the third layer; however, as described above, from the viewpoints of suppressing diffusion of the volatile corrosion inhibitor and suppressing curling, it is preferable to use virgin polyethylene (low-density polyethylene or linear low-density polyethylene) having a density equal to or higher than that of the recycled polyethylene constituting the first layer.

Regardless of whether the polyethylene constituting the third layer is virgin polyethylene or recycled polyethylene, the above-described phenolic antioxidant may be contained. When the phenolic antioxidant is contained, the content thereof is preferably 500 ppm to 5000 ppm, more preferably 1000 ppm to 4000 ppm, relative to the polyethylene constituting the third layer. This does not exclude inclusion of a phenolic antioxidant used in producing recycled polyethylene, and the recycled polyethylene may contain conventionally used antioxidants (e.g., phosphorus-based, sulfur-based, and amine-based antioxidants).

The thickness of the third layer constituting the corrosion-inhibiting film is as described in the first aspect.

The total thickness of the corrosion-inhibiting film according to the second aspect of the present disclosure is as described in the first aspect for the case where the film is multilayered.

### [Method for Producing Corrosion-Inhibiting Film]

The corrosion-inhibiting film according to the second aspect of the present disclosure can be obtained by co-extrusion of the first layer and the second layer described above (and, when a third layer is further provided, the first layer, the second layer, and the third layer). In co-extrusion, the corrosion-inhibiting film can be obtained by a blown film co-extrusion process using a circular die or a T-die film co-extrusion process. Among these, the blown film co-extrusion process makes it possible to perform melt co-extrusion at a lower temperature, such as 200°C or lower, and thus thermal decomposition and volatilization (vaporization) of the volatile corrosion inhibitor during film formation can be suppressed. In particular, when recycled polyethylene is used as the resin component of the second layer, the melting temperature during film formation needs to be slightly higher (about 200°C to 210°C) than that for virgin polyethylene; however, according to the blown film co-extrusion process, the melting temperature of the virgin polyethylene of the first layer can be set to 200°C or lower, and furthermore, the influence of heat on the first layer can be reduced by air cooling during film formation. As a result, the corrosion-inhibiting film having an excellent corrosion-inhibiting effect can be provided while using a recycled resin. As in the second aspect of the present disclosure, the film is a two-layer or three-layer co-extruded film made of polyethylene, and thus has improved puncture resistance compared to a single-layer film. Therefore, even when a metal mechanical member having a protruding portion is packaged, the corrosion-inhibiting film of the present invention can suppress tearing caused by mechanical components.

In forming the first layer, in order to enhance dispersibility of the volatile corrosion inhibitor, a masterbatch containing the volatile corrosion inhibitor may be used, and co-extrusion may be performed using a blend of the masterbatch and polyethylene having a predetermined density. The proportion of the volatile corrosion inhibitor in the masterbatch is not particularly limited; however, the masterbatch and polyethylene having a predetermined density may be blended in such a manner that the proportion of the volatile corrosion inhibitor in the first layer falls within the above-described range.

### <Third Aspect>

Embodiments of the corrosion-inhibiting film according to a third aspect of the present disclosure will be described below with reference to the drawings as appropriate.

Fig. 3 is a schematic cross-sectional view illustrating an embodiment of a corrosion-inhibiting film according to the third aspect of the present disclosure. The corrosion-inhibiting film 1 according to the third aspect of the present disclosure is a co-extruded film including at least the first layer 10, the second layer 20, and the third layer 30 in this order. The phrase "the corrosion-inhibiting film includes the respective layers in this order" indicates that the corrosion-inhibiting film 1 includes the respective layers (the first layer 10, the second layer 20, and the third layer 30) in this order in the thickness direction of the corrosion-inhibiting film 1.

In the corrosion-inhibiting film 1 according to the third aspect of the present disclosure, the first layer 10 is a layer that constitutes the innermost layer when the corrosion-inhibiting film is used as a package for metal components and the like, the third layer 30 is a layer that constitutes the outermost layer when used as a package, and the second layer 20 is a layer provided between the first layer 10 and the third layer 30. The respective layers constituting the corrosion-inhibiting film 1 according to the third aspect of the present disclosure will be described below.

### [First Layer]

The first layer constituting the corrosion-inhibiting film according to the third aspect of the present disclosure is a layer that contains, as a resin component, polyethylene having a density of 0.860 g/cm³ or more and 0.932 g/cm³ or less as a main component. In the present disclosure, the phrase "a layer containing polyethylene as a main component" refers to a layer in which the proportion of polyethylene is 50% or more by mass in 100% by mass of the layer. The above proportion is preferably 60% or more by mass, more preferably 70% or more by mass, still more preferably 80% or more by mass, even more preferably 90% or more by mass, and particularly preferably 95% or more by mass.

As the polyethylene having a density of 0.860 g/cm³ or more and 0.932 g/cm³ or less, low-density polyethylene and linear low-density polyethylene can be suitably used, as described above, and linear low-density polyethylene is more preferred. More preferably, linear low-density polyethylene having a density of 0.900 g/cm³ or more and 0.932 g/cm³ or less is used as the resin component constituting the first layer.

The polyethylene having a density of 0.860 g/cm³ or more and 0.932 g/cm³ or less may be virgin polyethylene, or may be recycled polyethylene from the viewpoint of reducing environmental impact. It may also be a mixture of virgin polyethylene and recycled polyethylene. That is, it may be at least one selected from the group consisting of virgin polyethylene and recycled polyethylene.

The first layer constituting the corrosion-inhibiting film according to the third aspect of the present disclosure contains a volatile corrosion inhibitor. The first layer can be formed by kneading the volatile corrosion inhibitor into polyethylene having a predetermined density, which serves as the above-described resin component, and forming a film.

From the viewpoint of release characteristics of the corrosion inhibitor and extrusion film formability of the resin, the amount of the volatile corrosion inhibitor added is preferably 0.1% or more by mass and 30% or less by mass, more preferably 0.5% or more by mass and 20% or less by mass, and still more preferably 2% or more by mass and 10% or less by mass, relative to the entirety of the first layer.

Other characteristics of the volatile corrosion inhibitor are as described in the second aspect.

The thickness of the first layer constituting the corrosion-inhibiting film is as described in the first aspect in the case where the film is multilayered.

### [Second Layer]

The second layer constituting the corrosion-inhibiting film according to the third aspect of the present disclosure is a layer provided between the first layer and the third layer, and contains, as a resin component, recycled polyethylene as a main component. The use of recycled polyethylene enables a reduction in environmental impact. As described above, recycled polyethylene, particularly mechanically recycled polyethylene, contains impurities and various grades as compared with virgin polyethylene resin, and when recycled polyethylene is used as a main component of the resin constituting the third layer or the first layer, the film-forming temperature needs to be set higher. It is also known that recycled polyethylene is more likely to cause fish eyes and wrinkles when formed into a film than virgin polyethylene. In the third aspect of the present disclosure, the corrosion-inhibiting film has a three-layer structure in which recycled polyethylene is used for the second layer, so that the above-described problems are solved while reducing environmental impact.

The second layer constituting the corrosion-inhibiting film according to the third aspect of the present disclosure may contain an antioxidant, or need not contain an antioxidant. Other characteristics of the second layer are as described in the second aspect.

### [Third Layer]

The third layer of the corrosion-inhibiting film according to the third aspect of the present disclosure is a layer that constitutes the third layer when the corrosion-inhibiting film is used as a package for metal components and the like. The corrosion-inhibiting film includes the third layer, so that diffusion of the volatile corrosion inhibitor contained in the first layer into the atmosphere outside the corrosion-inhibiting film can be suppressed. The third layer contains, as a resin component, polyethylene serving as a main component, the polyethylene having a density equal to or higher than that of the polyethylene constituting the above-described first layer. For example, when the polyethylene constituting the first layer is low-density polyethylene or linear low-density polyethylene, low-density polyethylene, linear low-density polyethylene, medium-density polyethylene, or high-density polyethylene may be used for the third layer.

From the viewpoint of suppressing diffusion of the volatile corrosion inhibitor, it can be said that polyethylene having a high density is preferably used as the polyethylene constituting the third layer. However, from the viewpoints of film formability during production of the corrosion-inhibiting film and suppression of curling of the resulting film, polyethylene should be selected in such a manner that the difference in density between the polyethylene constituting the first layer located as the innermost layer and the polyethylene constituting the third layer is not large. From the viewpoints of suppressing diffusion of the volatile corrosion inhibitor and suppressing curling, it is preferable to use low-density polyethylene or linear low-density polyethylene having a density equal to or higher than that of the polyethylene constituting the first layer.

Either virgin polyethylene or recycled polyethylene may be used as the polyethylene constituting the third layer. From the viewpoint of reducing environmental impact, it can be said that it is preferable to use recycled polyethylene also for the third layer; however, as described above, from the viewpoints of suppressing diffusion of the volatile corrosion inhibitor and suppressing curling, it is preferable to use virgin polyethylene (low-density polyethylene or linear low-density polyethylene) having a density equal to or higher than that of the polyethylene constituting the first layer.

The thickness of the third layer constituting the corrosion-inhibiting film is as described in the first aspect.

The total thickness of the corrosion-inhibiting film according to the third aspect of the present disclosure is as described in the first aspect for the case where the film is multilayered.

### [Method for Producing Corrosion-Inhibiting Film]

The corrosion-inhibiting film according to the third aspect of the present disclosure can be obtained by co-extrusion of the first layer, the second layer, and the third layer described above. In co-extrusion, the corrosion-inhibiting film can be obtained by a blown film co-extrusion process using a circular die or a T-die film co-extrusion process. Among these, the blown film co-extrusion process makes it possible to perform melt co-extrusion at a lower temperature, such as 200°C or lower, and thus thermal decomposition and volatilization (vaporization) of the volatile corrosion inhibitor during film formation can be suppressed. In particular, when recycled polyethylene is used for the second layer, the melting temperature during film formation needs to be slightly higher (about 200°C to 210°C) than that for virgin polyethylene; however, according to the blown film co-extrusion process, the melting temperature of the polyethylene of the first layer can be set to 200°C or lower, and furthermore, the influence of heat on the first layer can be reduced by air cooling during film formation. As a result, the corrosion-inhibiting film having an excellent corrosion-inhibiting effect can be provided while using a recycled resin. As in the third aspect of the present disclosure, the film is a three-layer co-extruded film made of polyethylene, and thus has improved puncture resistance compared to a single-layer film. Therefore, even when a metal mechanical member having a protruding portion is packaged, the corrosion-inhibiting film of the present invention can suppress tearing caused by the mechanical member.

In forming the first layer, in order to enhance dispersibility of the volatile corrosion inhibitor, a masterbatch containing the volatile corrosion inhibitor may be used, and co-extrusion may be performed using a blend of the masterbatch and polyethylene having a predetermined density. The proportion of the volatile corrosion inhibitor in the masterbatch is not particularly limited; however, the masterbatch and polyethylene having a predetermined density may be blended in such a manner that the proportion of the volatile corrosion inhibitor in the first layer falls within the above-described range.

In addition, various additives may be added to one or more layers of the corrosion-inhibiting film according to the third aspect of the present disclosure, as long as the characteristics are not impaired. Examples of additives include antioxidants, slip agents, plasticizers, ultraviolet stabilizers, anti-discoloration agents, matting agents, deodorants, flame retardants, weather resistance agents, antistatic agents, filament friction-reducing agents, release agents, ion-exchange agents, antiblocking agents, and color pigments.

The corrosion-inhibiting film according to the third aspect of the present disclosure can be used as a packaging material for packaging metal members such as mechanical components. There are no particular restrictions on the shape or form of the packaging material, and it can be in the form of a film to wrap the contents, or the corrosion-inhibiting film can be folded or overlapped and heat-sealed to form a bag.

In addition, various additives may be added to one or more layers of each of the corrosion-inhibiting films according to the first to third aspects of the present disclosure, as long as the characteristics are not impaired. Examples of additives include slip agents, plasticizers, ultraviolet stabilizers, anti-discoloration agents, matting agents, deodorants, flame retardants, weather resistance agents, antistatic agents, filament friction-reducing agents, release agents, ion-exchange agents, antiblocking agents, and color pigments.

The corrosion-inhibiting film according to each of the first to third aspects of the present disclosure can be used as a packaging material for packaging metal members such as mechanical components. There are no particular restrictions on the shape or form of the packaging material, and it can be in the form of a film to wrap the contents, or the corrosion-inhibiting film can be folded or overlapped and heat-sealed to form a bag.

### EXAMPLES

Hereinafter, the corrosion-inhibiting films according to the first to third aspects of the present disclosure will be described in more detail by way of Examples; however, the corrosion-inhibiting films according to the first to third aspects of the present disclosure are not limited to the following Examples.

### [Example 1]

A co-extruded film having a three-layer structure of a first layer/second layer/third layer was formed with a co-extrusion blown film forming machine.

For the first layer, a dry blend obtained by dry-blending, at a mass ratio of 90:10, recycled polyethylene (density: 0.920 g/cm³; MFR: 1.0 g/10 min; manufactured by Dow Chemical Company; XUS 60922.01) and a masterbatch of the above recycled polyethylene and a volatile corrosion inhibitor, together with a phenolic antioxidant (manufactured by BASF Japan Ltd.; Irganox 1010) in an amount corresponding to 1500 ppm relative to the recycled polyethylene, was used. The masterbatch of the volatile corrosion inhibitor used was one prepared by kneading ester compounds of pentanoic acid, hexanoic acid, heptanoic acid, and octanoic acid into the above polyethylene in such a manner that the content thereof was 10% by mass.

For the second layer, the recycled polyethylene (density: 0.920 g/cm³; MFR: 1.0 g/10 min; manufactured by Dow Chemical Company; XUS 60922.01) and the phenolic antioxidant (manufactured by BASF Japan Ltd.; Irganox 1010) in an amount corresponding to 1500 ppm relative to the recycled polyethylene were used.

For the third layer, linear low-density polyethylene (density: 0.931 g/cm³; MFR: 2.1 g/10 min; manufactured by Prime Polymer Co., Ltd.; UZ3520) was used.

The thicknesses of the respective layers of the corrosion-inhibiting film obtained as described above were 20 µm for the first layer, 50 µm for the second layer, and 10 µm for the third layer.

### [Example 2]

A corrosion-inhibiting film was produced in the same manner as in Example 1, except that benzotriazole, which is a heteroaromatic compound, was used as the volatile corrosion inhibitor instead of the carboxylic acid ester compound.

### [Comparative Example 1]

A corrosion-inhibiting film was produced in the same manner as in Example 1, except that as the masterbatch containing the volatile corrosion inhibitor, ethanolamine, which is an amine-based volatile corrosion inhibitor, was used instead of the carboxylic acid ester compound.

### [Comparative Example 2]

A corrosion-inhibiting film was produced in the same manner as in Example 1, except that, as the antioxidant, a phosphorus-based antioxidant (manufactured by BASF Japan Ltd.; Irgafos 168) was used instead of the phenolic antioxidant.

### [Evaluation of Corrosion Resistance]

Each of the corrosion-inhibiting films obtained as described above was cut into a size of 150 mm × 200 mm to prepare evaluation samples. A degreased iron plate (gray cast iron, FC200, degreased; dimensions: 40 mm × 60 mm × 10 mm) was covered with each evaluation sample and stored for 20 days in a thermostatic chamber adjusted to 40°C and 90% RH. Thereafter, the appearance of the iron plate was evaluated in accordance with the following evaluation criteria.
⊚: No rust or discoloration, or only spot rust and slight discoloration occurred
○: Rust occurred on portions corresponding to less than 10% of the surface area of the iron plate
Δ: Rust occurred on portions corresponding to 10% or more and less than 50% of the surface area of the iron plate
×: Rust occurred on portions corresponding to 50% or more of the surface area of the iron plate

The evaluation results are presented in Table 1 below.

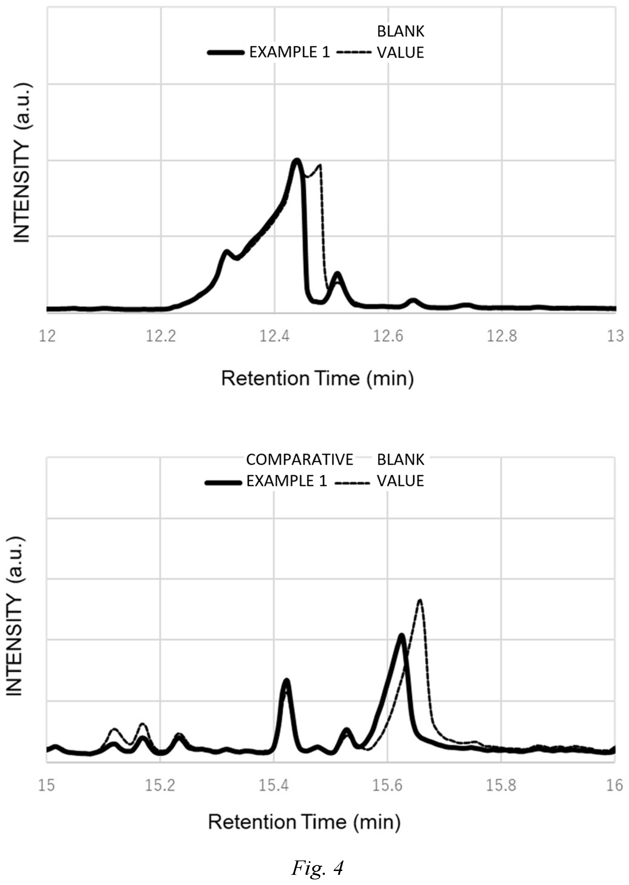

The resin composition (recycled polyethylene, antioxidant, and volatile corrosion inhibitor) constituting the first layer of each of Example 1 and Comparative Example 1 was measured using a mass spectrometer (GCMS-QP2010, manufactured by Shimadzu Corporation), and the amount of decrease in the volatile corrosion inhibitor was evaluated. Only the volatile corrosion inhibitor was measured and used as a blank. The measurement results are presented in Fig. 4.

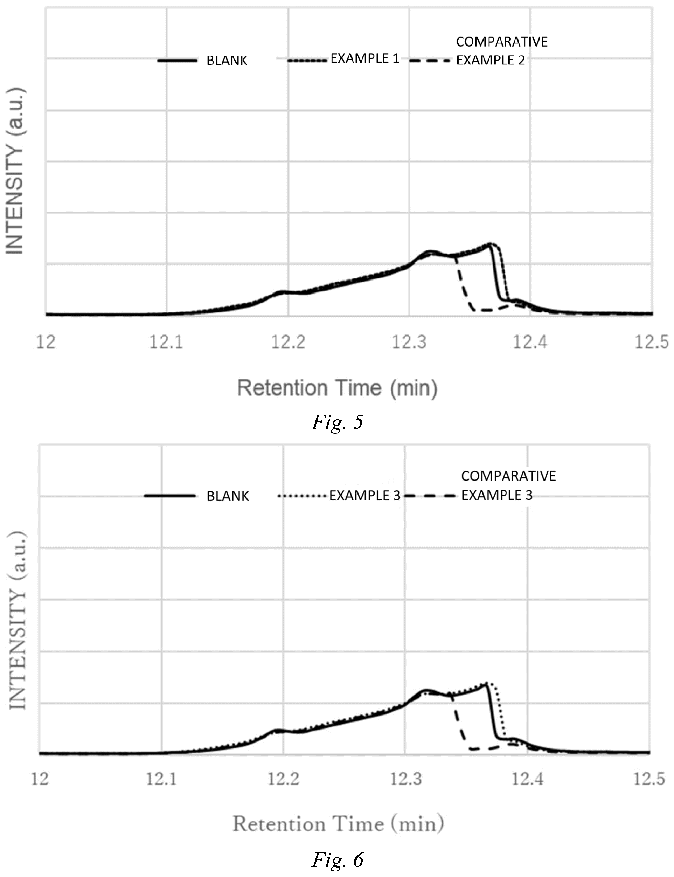

With respect to each of the resin compositions constituting the first layer of Example 1 and Comparative Example 2, the amount of decrease in the volatile corrosion inhibitor was evaluated in the same manner as described above. The measurement results are presented in Fig. 5.

**[Table 1]**

| | Layer configuration | Antioxidant | Volatile corrosion inhibitor | Corrosion resistance |
|---|---|---|---|---|
| Example 1 | 3-layer co-extrusion | phenolic | carboxylic acid ester | ○ |
| Example 2 | 3-layer co-extrusion | phenolic | benzotriazole | ○ |
| Comparative Example 1 | 3-layer co-extrusion | phenolic | amine-based | × |
| Comparative Example 2 | 3-layer co-extrusion | phosphorus-based | carboxylic acid ester | × |

As is apparent from the evaluation results in Table 1 and Figs. 4 and 5, the corrosion-inhibiting film of the present disclosure has excellent corrosion resistance while using recycled resin.

### [Example 3]

A co-extruded film having a three-layer structure of a first layer/second layer/third layer was formed with a co-extrusion blown film forming machine.

For components constituting the first layer, a dry blend obtained by dry-blending, at a mass ratio of 90:10, linear low-density polyethylene (density: 0.916 g/cm³; MFR: 2.3 g/10 min; manufactured by Japan Polyethylene Corporation; NF444N) and a masterbatch of a volatile corrosion inhibitor was used. The masterbatch of the volatile corrosion inhibitor used was one prepared by kneading ester compounds of pentanoic acid, hexanoic acid, heptanoic acid, and octanoic acid into the above linear low-density polyethylene in such a manner that the content thereof was 10% by mass.

As components constituting the second layer, recycled polyethylene (density: 0.920 g/cm³; MFR: 1.0 g/10 min; manufactured by Dow Chemical Company; XUS 60922.01) and a phenolic antioxidant (manufactured by BASF Japan Ltd.; Irganox 1010) in an amount corresponding to 1500 ppm relative to the recycled polyethylene were used.

As a component constituting the third layer, linear low-density polyethylene (density: 0.931 g/cm³; MFR: 2.1 g/10 min; manufactured by Prime Polymer Co., Ltd.; UZ3520) was used.

The thicknesses of the respective layers of the corrosion-inhibiting film obtained as described above were 20 µm for the first layer, 50 µm for the second layer, and 10 µm for the third layer.

### [Example 4]

A corrosion-inhibiting film was produced in the same manner as in Example 3, except that as the masterbatch containing the volatile corrosion inhibitor, ethanolamine, which is an amine-based volatile corrosion inhibitor, was used instead of the carboxylic acid ester compound.

### [Example 5]

A corrosion-inhibiting film was produced in the same manner as in Example 3, except that as the volatile corrosion inhibitor, a phenolic antioxidant (manufactured by BASF Japan Ltd.; Irgafos 168) was used instead of the carboxylic acid ester compound.

### [Example 6]

A corrosion-inhibiting film was produced in the same manner as in Example 3, except that recycled polyethylene (density: 0.920 g/cm³; MFR: 1.0 g/10 min; manufactured by Dow Chemical Company; XUS 60922.01) was used for the third layer.

### [Comparative Example 3]

For the first layer, a dry blend obtained by dry-blending, at a mass ratio of 96:4, recycled polyethylene (density: 0.920 g/cm3; MFR: 1.0 g/10 min; manufactured by Dow Chemical Company; XUS 60922.01) and a masterbatch of the above recycled polyethylene and a volatile corrosion inhibitor, together with a phenolic antioxidant (manufactured by BASF Japan Ltd.; Irgafos 168) in an amount corresponding to 1500 ppm relative to the recycled polyethylene, was used. A corrosion-inhibiting film was produced in the same manner as in Example 3, except that the masterbatch of the volatile corrosion inhibitor used was one prepared by kneading ester compounds of pentanoic acid, hexanoic acid, heptanoic acid, and octanoic acid into the above recycled polyethylene in such a manner that the content thereof was 10% by mass.

### [Comparative Example 4]

A corrosion-inhibiting film was produced in the same manner as in Comparative Example 3, except that, as the masterbatch containing the volatile corrosion inhibitor, ethanolamine, which is an amine-based volatile corrosion inhibitor, was used instead of the carboxylic acid ester compound.

### [Evaluation of Corrosion Resistance]

Each of the corrosion-inhibiting films obtained as described above was cut into a size of 150 mm × 200 mm to prepare evaluation samples. A degreased iron plate (gray cast iron, FC200, degreased; dimensions: 40 mm × 60 mm × 10 mm) was covered with each evaluation sample and stored for 20 days in a thermostatic chamber adjusted to 40°C and 90% RH. Thereafter, the appearance of the iron plate was evaluated in accordance with the following evaluation criteria.
⊚: No rust or discoloration, or only spot rust and slight discoloration occurred
∘: Rust occurred on portions corresponding to less than 10% of the surface area of the iron plate
Δ: Rust occurred on portions corresponding to 10% or more and less than 50% of the surface area of the iron plate
×: Rust occurred on portions corresponding to 50% or more of the surface area of the iron plate

The evaluation results are presented in Table 2 below.

The resin composition (recycled polyethylene, antioxidant, and volatile corrosion inhibitor) constituting the first layer of each of Example 3 and Comparative Example 3 was measured using a mass spectrometer (GCMS-QP2010, manufactured by Shimadzu Corporation), and the amount of decrease in the volatile corrosion inhibitor was evaluated. Only the volatile corrosion inhibitor was measured and used as a blank. The measurement results are presented in Fig. 6.

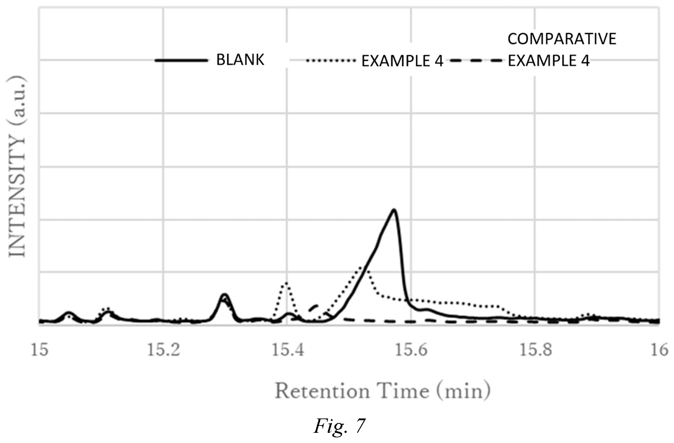

With respect to each resin composition constituting the first layer of Example 4 and Comparative Example 4, the amount of decrease in the volatile corrosion inhibitor was evaluated in the same manner as described above. The measurement results are presented in Fig. 7.

**[Table 2]**

| | Layer configuration | Composition of first layer | Composition of second layer | Corrosion resistance |
|---|---|---|---|---|
| Example 3 | 3-layer co-extrusion | virgin PE + volatile corrosion inhibitor | recycled PE + antioxidant | ○ |
| Example 4 | 3-layer co-extrusion | virgin PE + volatile corrosion inhibitor | recycled PE + antioxidant | ○ |
| Example 5 | 3-layer co-extrusion | virgin PE + volatile corrosion inhibitor | recycled PE + antioxidant | ○ |
| Example 6 | 3-layer co-extrusion | virgin PE + volatile corrosion inhibitor | recycled PE + antioxidant | ○ |
| Comparative Example 3 | 3-layer co-extrusion | recycled PE + volatile corrosion inhibitor + antioxidant | recycled PE | × |
| Comparative Example 4 | 3-layer co-extrusion | recycled PE + volatile corrosion inhibitor + antioxidant | recycled PE | × |

As is apparent from the evaluation results in Table 2 and Figs. 6 and 7, the corrosion-inhibiting film of the present invention has excellent corrosion resistance even while using recycled resin.

### [Example 7]

A co-extruded film having a three-layer structure of a first layer/second layer/third layer was formed with a co-extrusion blown film forming machine.

For components constituting the first layer, a dry blend obtained by dry-blending, at a mass ratio of 96:4, linear low-density polyethylene (density: 0.916 g/cm³; MFR: 2.3 g/10 min; manufactured by Prime Polymer Co., Ltd.; SP2020) and a masterbatch of a volatile corrosion inhibitor was used. The masterbatch of the volatile corrosion inhibitor used was one prepared by kneading ester compounds of pentanoic acid, hexanoic acid, heptanoic acid, and octanoic acid into the above linear low-density polyethylene in such a manner that the content thereof was 10% by mass.

As a component constituting the second layer, recycled polyethylene (density: 0.920 g/cm³; MFR: 1.0 g/10 min; manufactured by Dow Chemical Company; XUS 60922.01) was used.

As a component constituting the third layer, linear low-density polyethylene (density: 0.931 g/cm³; MFR: 2.1 g/10 min; manufactured by Prime Polymer Co., Ltd.; UZ3520) was used.

The thicknesses of the respective layers of the corrosion-inhibiting film obtained as described above were 20 µm for the first layer, 50 µm for the second layer, and 10 µm for the third layer.

### [Example 8]

A co-extruded film was formed in the same manner as in Example 7, except that, as components constituting the second layer, a dry blend obtained by dry-blending recycled polyethylene (density: 0.920 g/cm³; MFR: 1.0 g/10 min; manufactured by Dow Chemical Company; XUS 60922.01) and linear low-density polyethylene (density: 0.921 g/cm³; MFR: 2.0 g/10 min; manufactured by Japan Polyethylene Corp.) at a mass ratio of 1:1 was used, thereby providing a corrosion-inhibiting film. The thicknesses of the respective layers of the corrosion-inhibiting film obtained were 20 µm for the first layer, 50 µm for the second layer, and 10 µm for the third layer.

### [Example 9]

A co-extruded film was formed in the same manner as in Example 8, except that, as components constituting the first layer, a dry blend obtained by dry-blending recycled polyethylene (density: 0.920 g/cm³; MFR: 1.0 g/10 min; manufactured by Dow Chemical Company; XUS 60922.01), linear low-density polyethylene (density: 0.919 g/cm³; MFR: 2.0 g/10 min; manufactured by Prime Polymer Co., Ltd.; UZ2021L), and the above-described masterbatch of the volatile corrosion inhibitor at a mass ratio of 66:28:6 was used, thereby obtaining a corrosion-inhibiting film. The thicknesses of the respective layers of the corrosion-inhibiting film obtained were 20 µm for the first layer, 50 µm for the second layer, and 10 µm for the third layer.

### [Example 10]

A co-extruded film was formed in the same manner as in Example 9, except that, as components constituting the first layer, a dry blend obtained by dry-blending recycled polyethylene (density: 0.920 g/cm³; MFR: 1.0 g/10 min; manufactured by Dow Chemical Company; XUS 60922.01) and the above-described masterbatch of the volatile corrosion inhibitor at a mass ratio of 96:4 was used, thereby obtaining a corrosion-inhibiting film. The thicknesses of the respective layers of the obtained corrosion-inhibiting film were 20 µm for the first layer, 60 µm for the second layer, and 10 µm for the third layer.

### [Comparative Example 5]

A bag made of a film containing a kneaded volatile corrosion inhibitor (thickness: 80 µm; width: 200 mm × height: 300 mm; manufactured by GSI Creos Corporation; BCK082030) was used.

### [Evaluation of Corrosion Resistance]

Each of the corrosion-inhibiting films obtained as described above was cut into a size of 150 mm × 200 mm to prepare evaluation samples. A degreased iron plate (gray cast iron, FC200, degreased; dimensions: 40 mm × 60 mm × 10 mm) was covered with each evaluation sample and stored for 20 days in a thermostatic chamber adjusted to 40°C and 90% RH. Thereafter, the appearance of the iron plate was evaluated in accordance with the following evaluation criteria. For Comparative Example 5, one side of the bag was cut into a size of 150 mm × 200 mm and used as the evaluation sample.
⊚: No rust or discoloration, or only spot rust and slight discoloration occurred
∘: Rust occurred on portions corresponding to less than 10% of the surface area of the iron plate
Δ: Rust occurred on portions corresponding to 10% or more and less than 50% of the surface area of the iron plate
×: Rust occurred on portions corresponding to 50% or more of the surface area of the iron plate

The evaluation results are presented in Table 3 below.

Fig. 3 illustrates photographs of the appearance of the iron plate surfaces after storage for 20 days in the thermostatic chamber.

### [Evaluation of Puncture Resistance]

Each corrosion-inhibiting film was fixed with a jig, and in accordance with JIS Z1707, a semicircular needle having a diameter of 1.0 mm and a tip radius of 0.5 mm was driven into the corrosion-inhibiting film from the third-layer side at a test speed of 50 mm/min, and the maximum force (N) required until the needle penetrated the film was measured.

The measurement results are presented in Table 3 below.

### [Evaluation of Mechanical Properties]

Each corrosion-inhibiting film was cut into a size of 50 mm × 50 mm to prepare evaluation samples. In accordance with JIS Z1702, a tensile test was performed at a test speed of 300 mm/min by applying a tensile load until the evaluation sample was broken, and the maximum load and the gauge length at break were determined. The maximum load and the gauge length at break were determined in both the MD direction and the TD direction of the evaluation sample. The thickness of each evaluation sample was measured at three locations including the gauge section, and the average value was taken as the thickness.

The measurement results are presented in Table 3 below.

**[Table 3]**

| | Layer configuration | Layer thickness ratio inner/middle/outer | Recycled Material content (%) | Corrosion resistance | Puncture resistance | Breaking strength (N) MD/TD | Elongation at break (%) MD/TD |
|---|---|---|---|---|---|---|---|
| Example 7 | 3-layer co-extrusion | 20/50/10 | 43 | ○ | 3.3 | 17.4/18.3 | 626/655 |
| Example 8 | 3-layer co-extrusion | 20/50/10 | 22 | ○ | 3.9 | 19.2/20.1 | 650/651 |
| Example 9 | 3-layer co-extrusion | 20/50/10 | 39 | ○ | 3.7 | 18.4/20.1 | 676/661 |
| Example 10 | 3-layer co-extrusion | 20/60/10 | 61 | ○ | 3.5 | 24.1/20.1 | 707/606 |
| Comparative Example 5 | - | 80 | 0 | ○ | 3.1 | 25.1/22.9 | 702/760 |

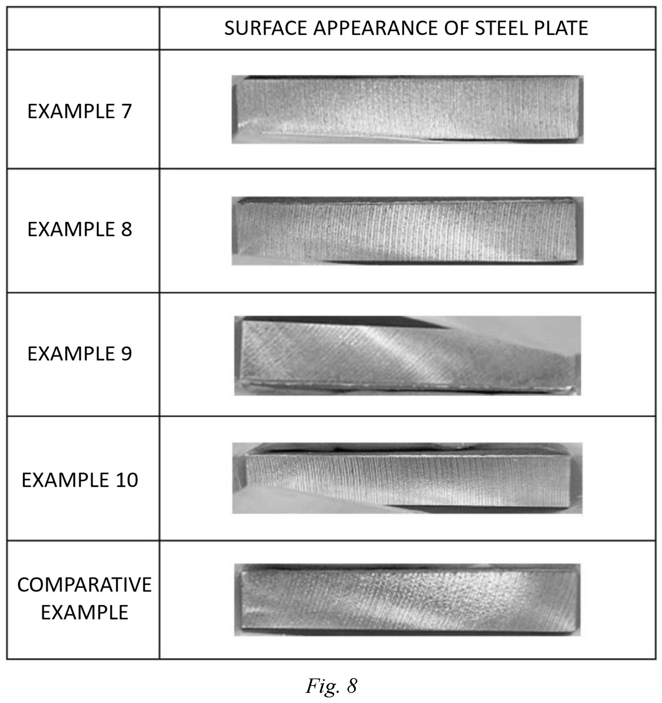

As is apparent from the evaluation results in Table 3 and Fig. 8, the corrosion-inhibiting film of the present invention has corrosion resistance equal to or better than that of a conventional single-layer corrosion-inhibiting film that does not use recycled resin, even while using recycled resin.

### Reference Signs List

1 corrosion-inhibiting film
10 first layer
20 second layer
30 third layer

## Claims

1. A corrosion-inhibiting film comprising at least recycled polyethylene, a volatile corrosion inhibitor, and an antioxidant,
wherein the volatile corrosion inhibitor is selected from a carboxylic acid ester and a heteroaromatic compound, and
the antioxidant is a phenolic antioxidant.

2. The corrosion-inhibiting film according to claim 1, wherein the volatile corrosion inhibitor is contained in an amount of 2% to 10% by mass relative to the recycled polyethylene.

3. The corrosion-inhibiting film according to claim 1, wherein the antioxidant is contained in an amount of 500 to 5000 ppm relative to the recycled polyethylene.

4. The corrosion-inhibiting film according to claim 1, wherein the corrosion-inhibiting film includes a first layer containing at least the recycled polyethylene, the volatile corrosion inhibitor, and the antioxidant, and a second layer containing polyethylene,
the polyethylene constituting the second layer is at least one selected from the group consisting of recycled polyethylene and virgin polyethylene, and
the first layer and the second layer are formed by co-extrusion.

5. The corrosion-inhibiting film according to claim 4, wherein the recycled polyethylene is polyethylene having a density of 0.860 g/cm³ or more and 0.932 g/cm³ or less.

6. A corrosion-inhibiting film comprising at least a first layer containing virgin polyethylene and a volatile corrosion inhibitor, and a second layer containing recycled polyethylene and an antioxidant,
wherein the first layer and the second layer are formed by co-extrusion.

7. The corrosion-inhibiting film according to claim 6, wherein the antioxidant is a phenolic antioxidant.

8. The corrosion-inhibiting film according to claim 6, wherein the volatile corrosion inhibitor is at least one selected from a carboxylic acid ester-based corrosion inhibitor, an alkanolamine-based corrosion inhibitor, and a heteroaromatic compound.

9. The corrosion-inhibiting film according to claim 6, wherein the second layer further contains virgin polyethylene.

10. The corrosion-inhibiting film according to claim 6, wherein the volatile corrosion inhibitor is contained in an amount of 2% to 10% by mass relative to the virgin polyethylene in the first layer.

11. The corrosion-inhibiting film according to claim 6, wherein the antioxidant is contained in an amount of 500 to 5000 ppm relative to the polyethylene constituting the second layer.

12. The corrosion-inhibiting film according to claim 6, wherein the polyethylene constituting the first layer is polyethylene having a density of 0.860 g/cm³ or more and 0.932 g/cm³ or less.

13. The corrosion-inhibiting film according to claim 6, further comprising a third layer made of polyethylene,
wherein the first layer, the second layer, and the third layer are formed by co-extrusion.

14. A corrosion-inhibiting film comprising a first layer, a second layer, and a third layer,
wherein the first layer contains a volatile corrosion inhibitor and polyethylene having a density of 0.860 g/cm³ or more and 0.932 g/cm³ or less,
the second layer contains recycled polyethylene,
the third layer contains polyethylene having a density equal to or higher than that of the polyethylene constituting the first layer, and
the first layer, the second layer, and the third layer are formed by co-extrusion.

15. The corrosion-inhibiting film according to any one of claims 5, 12, and 14, wherein the polyethylene constituting the first layer and having a density of 0.860 g/cm³ or more and 0.932 g/cm³ or less is at least one selected from low-density polyethylene and linear low-density polyethylene.

16. The corrosion-inhibiting film according to claim 14, wherein the volatile corrosion inhibitor is at least one selected from a carboxylic acid ester-based corrosion inhibitor and an alkanolamine-based corrosion inhibitor.

17. The corrosion-inhibiting film according to claim 14, wherein the first layer contains 2% to 10% by mass of the volatile corrosion inhibitor.

18. The corrosion-inhibiting film according to claim 14, wherein the second layer has a thickness of 2 to 4 times the thickness of the first layer.

19. The corrosion-inhibiting film according to claim 14, wherein the second layer contains the recycled polyethylene and virgin polyethylene.

20. The corrosion-inhibiting film according to claim 14, wherein the polyethylene constituting the first layer and having a density of 0.860 g/cm³ or more and 0.932 g/cm³ or less is at least one selected from the group consisting of virgin polyethylene and recycled polyethylene.
